# EUROPEAN PATENT SPECIFICATION

(11) **EP 3 070 388 B1**
(45) Date of publication and mention of the grant of the patent: **01.07.2020**
(21) Application number: 14862729.2
(22) Date of filing: 11.11.2014
(51) Int. Cl.: F16L 33/01, F16L 11/08, F16L 11/16, E21B 17/01, B21F 17/00

(54) **METHOD FOR PRODUCING THE CONFIGURATION OF A FLEXIBLE PIPE TENSILE ARMOUR AND THUS OBTAINED CONFIGURATION OF FLEXIBLE PIPE TENSILE ARMOUR**
VERFAHREN ZUR HERSTELLUNG DER KONFIGURATION EINER DEHNBAREN PANZERUNG EINES SCHLAUCHS UND ERHALTENE KONFIGURATION EINER DEHNBAREN PANZERUNG EINES SCHLAUCHS
PROCÉDÉ D'OBTENTION D'AGENCEMENT D'ARMURE DE TRACTION D'UN CONDUIT SOUPLE ET AGENCEMENT D'ARMURE DE TRACTION D'UN CONDUIT SOUPLE AINSI OBTENU

(30) Priority: 12.11.2013 BR 102013029115
(43) Date of publication of application: 21.09.2016
(73) Proprietor: Símeros Projetos Eletromecânicos Ltda., 91530-290 Porto Alegre - RS (BR)
(72) Inventor: BERTONI, Fabiano, 91550-000 Porto Alegre - RS (BR); LOPEZ, Facundo Sebastian, 90010-313 Porto Alegre - RS (BR)
(74) Representative: Nuss, Laurent
(86) International application number: PCT/BR2014/000410
(87) International publication number: WO 2015/070304

(56) References cited:
- WO-A1-99/19655
- WO-A1-99/19655
- WO-A1-2013/074098
- WO-A1-2013/149983
- US-A1- 2012 211 975
- US-B1- 6 273 142
- US-B1- 6 592 153
- US-B1- 6 592 153
- US-B2- 6 923 477

## Description

The invention refers to a process to obtain a tensile armor configuration of a flexible conduit and a flexible conduit with a tensile armor configuration obtained by this process. Such a process and such a flexible conduit are known from WO 2013/149983 A.

A flexible conduit is used in to transport fluids in the offshore oil and gas extraction systems. Flexible conduits used for this purpose are made with several layers of different materials and forms, among which are at least an internal tensile armor and at least an external tensile armor. To connect a flexible conduit to an adjacent element, such as another flexible conduit segment, a manifold station or a oil and gas extraction platform or ship, a connector, also known as "end-fitting", is installed at the end of the flexible conduit, such connector being responsible for supporting, accommodating and securing all layers of the end of the flexible conduit, maintaining internal and external tightness. In this context, the invention refers to a process to obtain a tensile armor configuration of a flexible conduit and a tensile armor configuration of a flexible conduit thus obtained for subsequent anchoring of the tensile armor of the flexible conduit with a connector.

In the field of offshore oil extraction, collecting oil and gas extracted in the seabed wells is through horizontal conduits, also known as "flowlines", generally static, and preponderantly vertical conduits, also known as "risers", responsible for the connection between the horizontal conduits and the platform or oil drilling ship. Vertical conduits can be rigid or flexible.

Notably, the flexible conduit (flexible risers) used for this purpose are exposed to different weather from the environment in which they are. Strong currents and the seawater itself require that the flexible conduits to be prepared for all the adversities that are imposed on them. For this purpose, state-of-the-art flexible conduits made with several layers of materials and different formats are already foreseen.

Among the layers present in a flexible conduit, are at least one internal tensile armor and at least one external tensile armor superimposed regarding such internal tensile armor, each tensile armor composed of a helical winding of a plurality of wires, usually steel wires. The tensile armors are responsible for the tensile strength of the flexible conduit.

Due to the complexity of manufacturing the flexible conduit and the size of the wire reel of the tensile armors used in this process, flexible conduit segments of approximately 1000 meters in length are used along an oil collection line. Thus, to achieve the required length of the collection line according to its application, connectors are installed at the ends of each flexible conduit segment in order to make the connection between different segments of flexible conduits. Furthermore, the connectors are used to connect the end of a flexible conduit to a manifold station or a platform or oil production ship.

The connectors are responsible for supporting, accommodating and securing all layers of the flexible conduit, maintaining internal and external tightness. When installing the connector on the flexible conduit, the internal tensile armor and external tensile armor must be anchored within the connector. To perform this anchoring, one of the possibilities is to perform a forming operation in the terminal region of each wire of each tensile armor, obtaining a formed terminal region in an anchoring profile. The formed terminal regions of each wire are accommodated inside a chamber in the connector, such chamber being filled with an epoxy resin, thereby performing the anchoring of the tensile armors with the connector.

Document US6592153 discloses a connector for flexible conduit in which the connector has an extension that advances under the tensile armors of the flexible conduit. At the end of the extension there is an internal sealing set, responsible for the internal tightness of the flexible conduit. Note that the wires of the internal tensile armor and external tensile armor have a terminal region formed into a wavy anchoring profile. During the connector assembly process in the flexible conduit, it is required to perform the unwinding and folding outward each wire part of the external tensile armor advancing over the connector extension, followed by unwinding and folding outward of each part of wire of the internal tensile armor advancing over the connector extension, so that an operator has access to the assembly region of the internal sealing set. From this tensile armor folding occurs a separation between the terminal regions of the wires of the external tensile armor and the terminal regions of the wires of the internal tensile armor, so that the forming of the terminal region of each wire can be performed without interference, with aid of a forming device.

Document BRPI1100148-8 proposes a connector model for flexible conduit, the connector having an internal sealing set displaced from the position under the region over which the tensile armors are anchored to a position next to a connector closing flange. Thus, it eliminates the need to fold the tensile armors of the flexible conduit to access the assembly region of the internal sealing set, which was a great inconvenience, since such folding causes residual stresses on the wires of the tensile armors, which is characterized as a major failure factor by fatigue of the tensile armors.

Document BR102013017228-6 proposes another connector model for flexible conduit in which the connector extension that advances under the tensile armors was completely eliminated. Also in this connector model, it is not necessary to fold the flexible conduit tensile armors to access the assembly region of the internal sealing set.

The configuration process of the tensile armor of a flexible conduit regarding obtaining the wires with the terminal regions formed into an anchoring profile, as a wavy shape as disclosed in US6592153, for anchoring with a connector that does not require folding of the tensile armors to assemble the inner sealing set, as connector models disclosed in BRPI1100148-8 or BR102013017228-6, presents inconveniences. More particularly, according to the state-of-the-art technique, to perform the forming operation in the terminal region of each wire of the internal tensile armor, it is necessary that the wires of the external tensile armor are unwound and folded outward, enabling access to such wires of the internal tensile armor for forming of their terminal regions, performed with the help of a forming device. When the wires of the external tensile armor are folded, such wires deform plastically thereby acquiring high residual stresses, which is characterized as a major failure factor by fatigue of the external tensile armor of the flexible conduit, reducing the durability of the set formed by the connector and the flexible conduit. Moreover, folding the wire of the external tensile armor is very laborious and takes much time to be performed.

In order to eliminate these inconveniences, the invention proposes a process to obtain a tensile armor configuration of a flexible conduit according to claim 1.

The invention also proposes a flexible conduit comprising a tensile armor configuration according to claim 7.

Advantageously, according to the proposed solution, from the cutting of the wires of the external tensile armor at the different length regarding the cutting of the wires of the internal tensile armor, the wires of such internal tensile armor are exposed and can be easily accessed for forming of their post cut terminal regions, without having to fold the wires of the external tensile armor. Thus, advantageously, the acquisition of residual stresses in the wires of the external tensile armor originated by folding them is eliminated, which contributes to greater durability of the set formed by the connector and flexible conduit. In addition, according to the proposed solution, advantageously the configuration process of the tensile armor of the flexible conduit regarding obtaining wires with the terminal regions formed in an anchoring profile becomes less laborious and can be done in less time.

The invention will be better understood with the following detailed description, which will be better understood with the figures, as follows:
Figure 1 shows a perspective view of a flexible conduit (50) in its original factory state.
Figure 2 shows a perspective view of the flexible conduit (50) shown in Figure 1 with a partial longitudinal sectional view to show its different layers (51, 52, 53, 54, 55, 56).
Figure 3 shows an enlarged perspective view of the free end (A) of the flexible conduit (50) shown in Figure 2.
Figure 4 shows a perspective view of the flexible conduit (50) shown in Figure 1, and after a cut of the external layers regarding the external tensile armor (55).
Figure 5 shows a perspective view of the flexible conduit (50) illustrated in Figure 4, and after a disparity step between a post cut terminal region (551b) of each wire (551) of the external tensile armor (55) and a post cut terminal region (541b) of each wire (541) of the internal tensile armor (54).
Figure 6 shows a perspective view of the flexible conduit (50) shown in Figure 5, and after forming the post cut terminal region (541b) of each wire (541) of the internal tensile armor (54), obtaining a formed terminal region (541c) in an anchoring profile in a helical shape.
Figure 7 shows a perspective view of the flexible conduit (50) shown in Figure 6, and after forming the post cut terminal region (551b) of each wire (551) of the external tensile armor (55), obtaining a formed terminal region (551c) in an anchoring profile in a helical shape.
Figure 8 shows an enlarged view of region "D" shown in Figure 7.
Figure 9 shows an enlarged perspective view of a wire (541, 551) with a formed terminal region (541c, 551c) in an anchoring profile in a helical shape.
Figure 10 shows a view equivalent to Figure 7 except that the anchoring profile of the formed terminal region (541c, 551c) of each wire (541, 551) of each tensile armor (54, 55) has a wavy shape wherein the curvature radius (R) of each wave varies progressively.
Figure 11 shows an enlarged view of region "E" shown in Figure 10.
Figure 12 shows an enlarged front view of a wire (541, 551) with a formed terminal region (541c, 551c) in an anchoring profile having a wavy shape in which the curvature radius (R) of each wave varies progressively.
Figure 13 shows a plan view in longitudinal section of a forming device (90) in position prior to forming.
Figure 14 shows a plan view in longitudinal section of a forming device (90) in the position after forming.
Figure 15 shows a perspective view of a connector (10) installed in a flexible conduit (50) with a tensile armor configuration as shown in Figure 7, wherein an external envelope (40) of the connector (10) and a filling in epoxy resin (T) are represented in longitudinal section to view the internal parts.
Figure 16 shows a plan view in longitudinal section of a connector (10) installed in a flexible conduit (50) with a tensile armor configuration as shown in Figure 7.
Figure 17 shows a perspective view of a connector (10) installed in a flexible conduit (50) with a tensile armor configuration as shown in Figure 10, wherein an external envelope (40) of the connector (10) and a filling in epoxy resin (T) are represented in longitudinal section to view the internal parts.
Figure 18 shows a plan view in longitudinal section of a connector (10) installed in a flexible conduit (50) with a tensile armor configuration as shown in Figure 10.

The following detailed description is made based on a flexible conduit (50) with six layers, as provided by the state-of-the-art. However, it will be evident that the invention herein proposed configures not only for a six-layer flexible conduit (50), may be applied to other flexible conduits with different numbers of layers, respecting the scope of the claims.

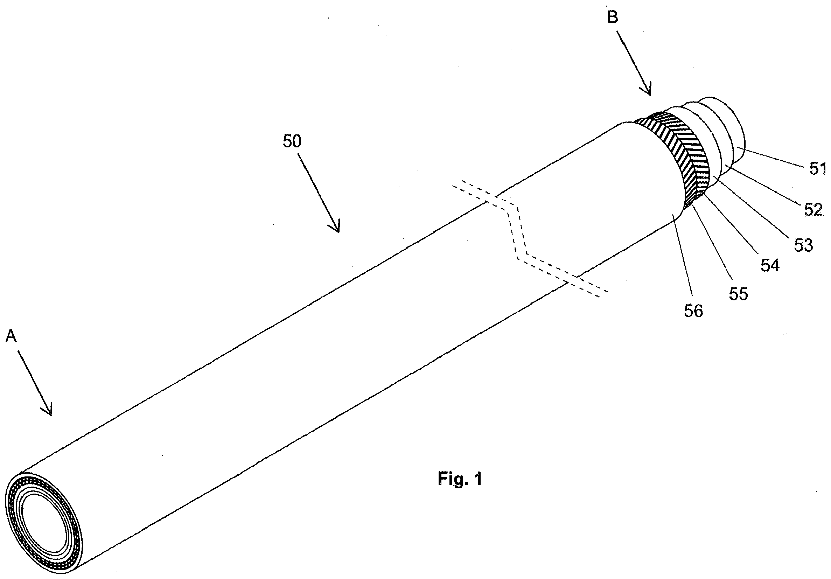

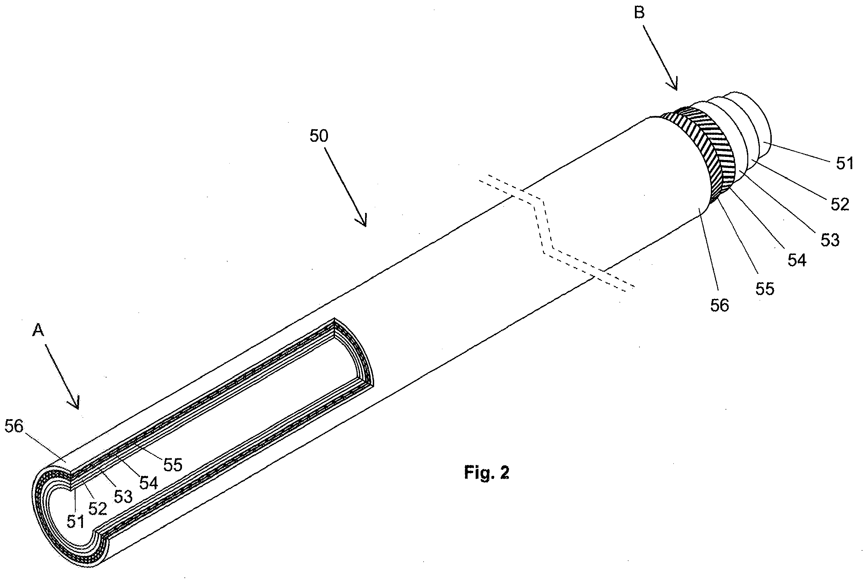

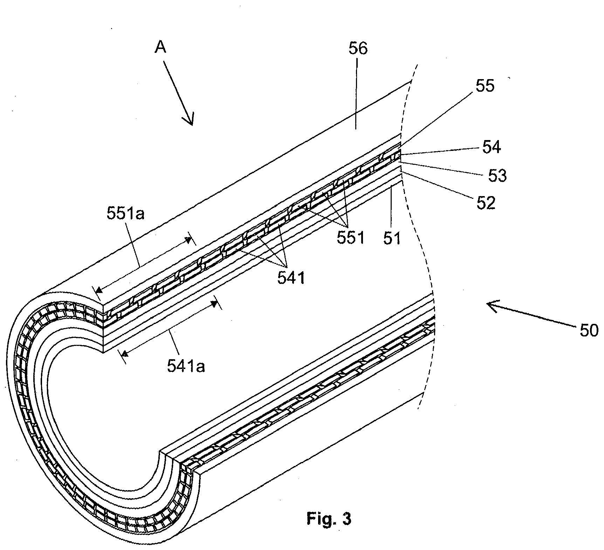

A superposed six-layer flexible conduit (50) is composed of an internal carcass (51), an internal sealing polymer layer (52), a pressure armor (53), an internal tensile armor (54), an external tensile armor (55) and an external sealing polymer layer (56). Figures 1, 2 and 3 show a flexible conduit segment (50) in its original factory state, with a free end (A) at which a connector (10) can be installed to connect such flexible conduit (50) to an adjacent element, such as another flexible conduit segment, a manifold station or an oil and gas extraction platform or ship, such connector (10) being responsible for sustaining, accommodating and securing all layers (51, 52, 53, 54, 55, 56) of the free end (A) of the flexible conduit (50), maintaining its internal and external tightness. In Figures 1, 2, 4, 5, 6, 7 and 10, the other end (B) of the flexible conduit (50) has its layers (51, 52, 53, 54, 55, 56) spread, only to view them.

In this context, the invention refers to a process to obtain a tensile armor configuration of a flexible conduit (50) and the tensile armor configuration of a flexible conduit (50) thus obtained for subsequent anchoring of the tensile armor (54, 55) of the flexible conduit (50) with a connector (10).

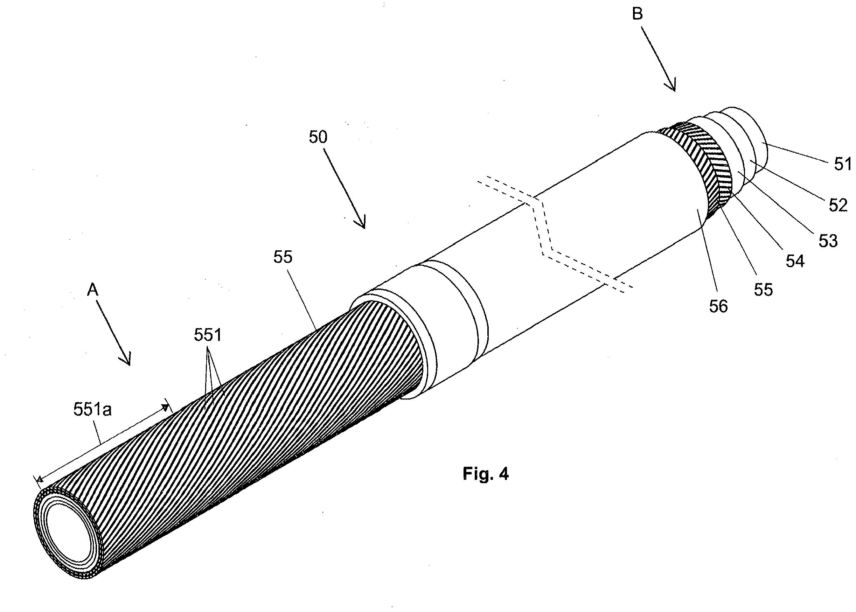

The flexible conduit (50) comprises at least one internal tensile armor (54) and at least one external tensile armor (55) superimposed regarding such internal tensile armor (54), each tensile armor (54, 55) composed of a helical winding of a plurality of wires (541, 551), each wire (541, 551) having a terminal region (541a, 551a). The process to obtain a tensile armor configuration of the flexible conduit (50) comprises a preparation step, in which the external layers of the flexible conduit (50) regarding the external tensile armor (55) are cut to allow access to such external tensile armor (55). Figure 4 shows a flexible conduit (50) after cutting the external layers regarding the external tensile armor (55), allowing access to such external tensile armor (55). Note that according to the model of flexible conduit (50) represented, the external layers regarding the external tensile armor (55) correspond to the external sealing polymer layer (56). Eventually, according to other models of flexible conduits, other layers may be present externally regarding the external tensile armor (55).

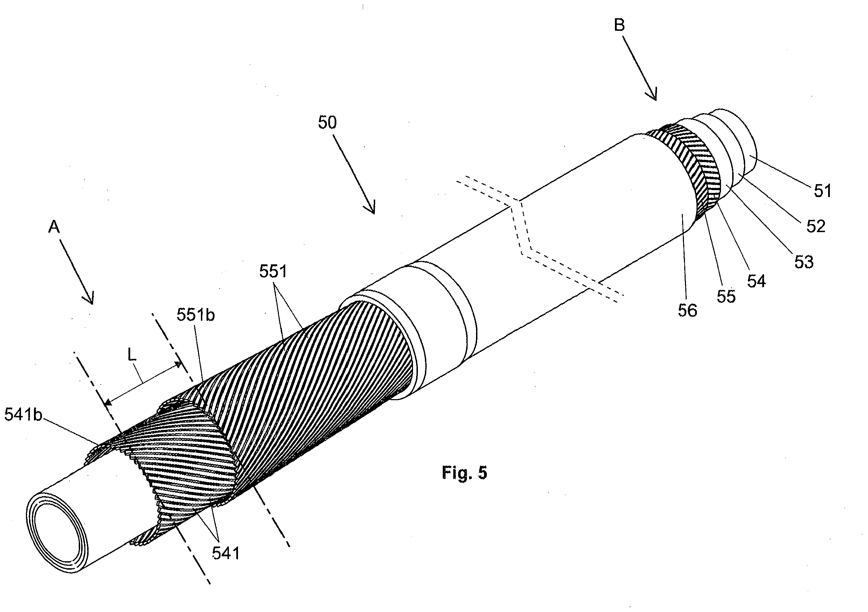

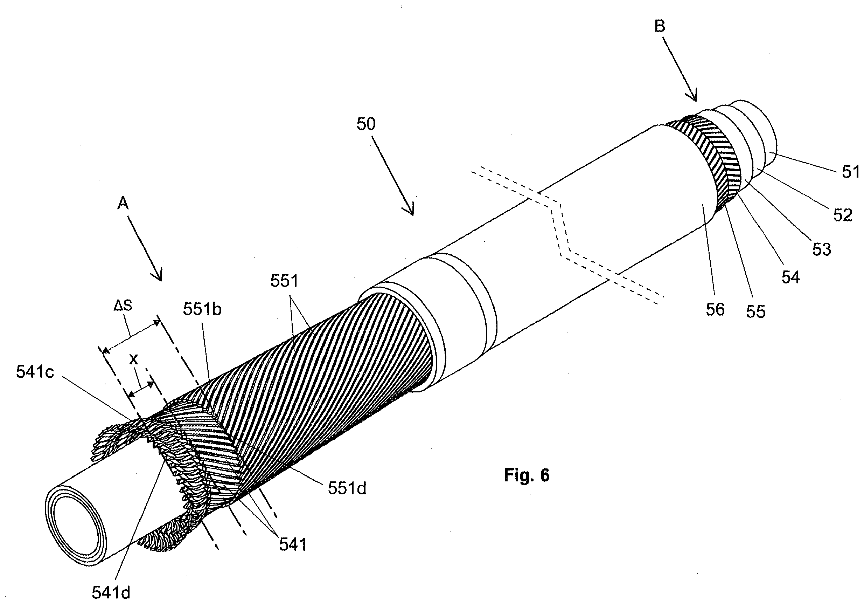

According to the invention, the process further comprises a disparity step in which the terminal region (551a) of each wire (551) of the external tensile armor (55) and the terminal region (541a) of each wire (541) of the internal tensile armor (54) are cut, assigning a difference between a post cut terminal region (551b) of each wire (551) of the external tensile armor (55) and a post cut terminal region (541b) of each wire (541) of the internal tensile armor (54) in a length (L) sufficient to allow a forming step, in which the post cut terminal region (541b) of at least one wire (541) of the internal tensile armor (54) is formed to obtain a formed terminal region (541c) in an anchoring profile. Figure 5 shows a flexible conduit (50) after the disparity step and Figure 6 shows a flexible conduit (50) after the forming step, wherein the post cut terminal region (541b) of each wire (541) of the internal tensile armor (54) is formed having a formed terminal region (541c) in an anchoring profile.

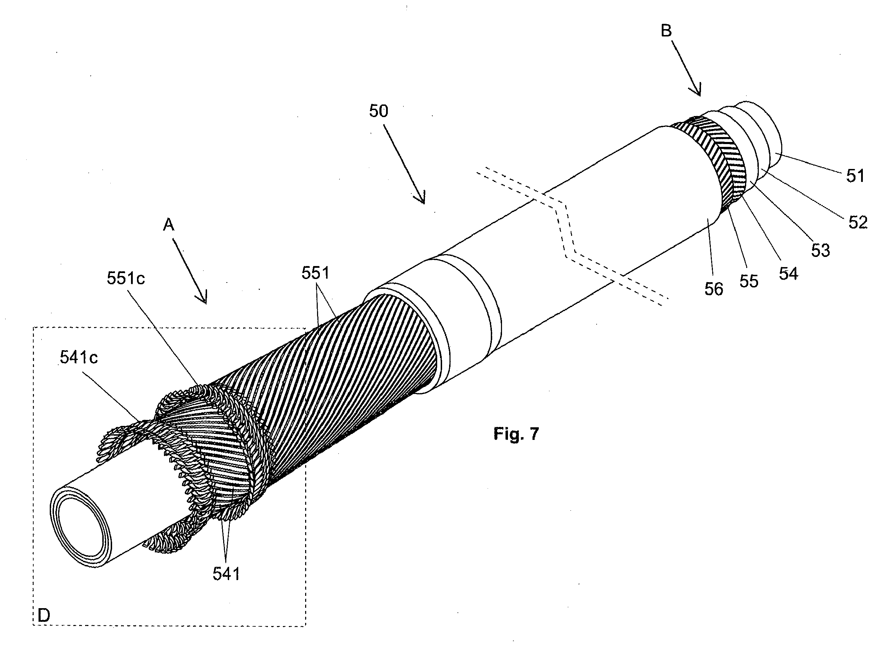

Preferably, in the forming step, the post cut terminal region (551b) of at least one wire (551) of the external tensile armor (55) is also formed to obtain a formed terminal region (551c) in an anchoring profile. Figure 7 shows a flexible conduit (50) after this additional forming step, wherein the post cut terminal region (551b) of each wire (551) of the external tensile armor (55) is formed having a formed terminal region (551c) in an anchoring profile. In this case, there is a more important anchoring effect in a later anchoring of the tensile armors (54, 55) with a connector (10). Naturally, if the process extends to the forming of the post cut terminal region (551b) of at least one wire (551) of the external tensile armor (55), besides the forming of the post cut terminal region (541b) of at least one wire (541) of the internal tensile armor (54), the forming order is at the operator's discretion.

Advantageously, according to the proposed solution, from the cutting of wires (551) of the external tensile armor (55) at the different length regarding the cutting of wires (541) of the internal tensile armor (54), the wires (541) of such internal tensile armor (54) are exposed and can be easily accessed for forming of their post cut terminal regions (541b), without requiring to fold the wires (551) of the external tensile armor (55). Thus, advantageously, the acquisition of residual stresses in the wires (551) of the external tensile armor (55) caused by their folding is eliminated, which contributes to greater durability of the set formed by the connector (10) and flexible conduit (50). In addition, according to the proposed solution, advantageously the configuration process of the tensile armor (54, 55) of the flexible conduit (50) regarding obtaining the wires (541, 551) with the formed terminal regions (541c, 551c) in an anchoring profile, becomes less labor intensive and can be performed in less time.

In the disparity step, the cutting of the terminal region of each wire (551) of the external tensile armor (55) and the cutting of the terminal region (541a) of each wire (541) of the internal tensile armor (54) are performed with the help of a cutting tool, such as a hand grinder.

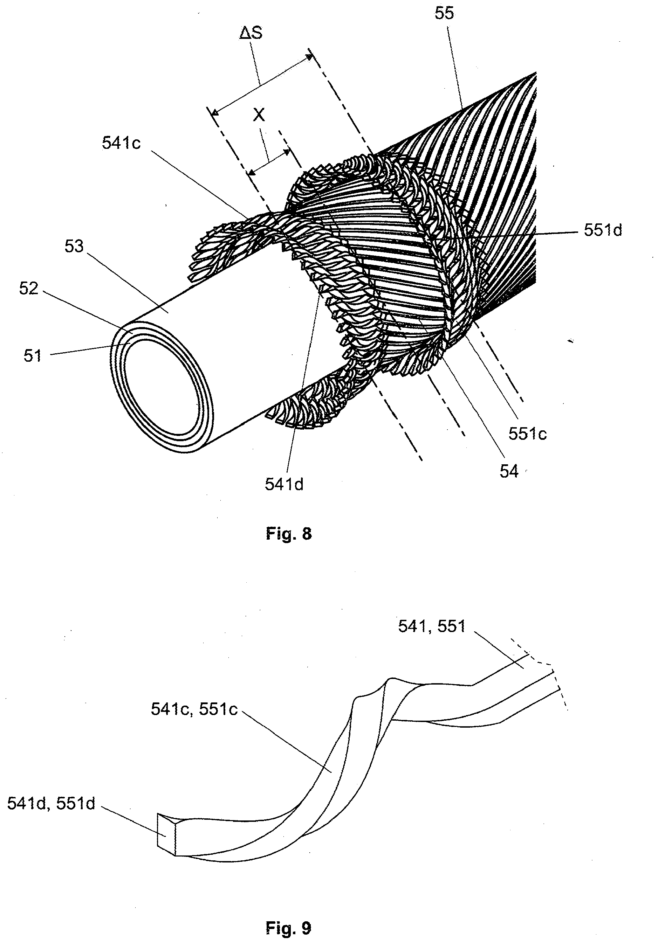

Preferably, the anchoring profile of the formed terminal region (541c) of at least one wire (541) of the internal tensile armor (54) has a helical shape, as can be seen in Figures 6, 7 and 8. Preferably, when at least one wire (551) of the external tensile armor (55) has a formed terminal region (551c) on an anchoring profile, such anchoring profile has a helical shape, as can be seen in Figures 7 and 8. One wire (541, 551) with a formed terminal region (541c, 551c) in a helical shaped anchoring profile may be observed in detail in Figure 9.

The forming of a wire (541, 551) obtaining a formed terminal region (541c, 551c) in an anchoring profile is performed with the help of a forming device. For example, a forming device to obtain a helical shaped anchoring profile comprises a support part, a forming die having an internal helical channel and a displacement mechanism to move the forming die in relation to the support part. For example, the displacement mechanism may comprise a hydraulic actuator responsible for moving the forming die. To perform the forming, the support part is fastened on the wire (541, 551) in a position beyond the post cut terminal region (541b, 551b) to be formed, acting to support the efforts during the forming process. The forming die is positioned so that the longitudinal axis of its helical channel is concentric to the longitudinal axis of the wire (541, 551). When the displacement mechanism is activated, as the forming die moves toward the support part, the helical internal channel advances over the post cut terminal region (541b, 551b) of the wire (541, 551), obliging it to pass through such helical internal channel, in order to obtain the formed terminal region (541c, 551c) in helical shaped anchoring profile. When the forming process is complete, the die is removed from the wire (541, 551). Therefore, the forming die can be split in two halves or spun around the helical shaped anchoring profile, similar to unscrewing.

Another example of a forming device to obtain a helical shaped anchoring profile comprises a movable jaw connected to a support part by a link. This forming device further comprises a drive mechanism responsible for turning the movable jaw around its own axis and for an axial approach movement of such movable jaw to the support part, thus resulting in a helical movement of such movable jaw. In order to forming, the support party is fastened on the wire (541, 551) in a position beyond the post cut terminal region (541b, 551b) to be formed, acting to support the efforts during the forming process. The movable jaw, in turn, is coupled to the free end of the post cut terminal region (541b, 551b) of the wire (541, 551). When activating the drive mechanism, the helical movement of the movable jaw shapes the post cut terminal region (541b, 551b) of the wire (541, 551), obtaining a formed terminal region (541c, 551c) in a helical shaped anchoring profile. Once the forming process is complete, the forming device is removed from the wire (541, 551).

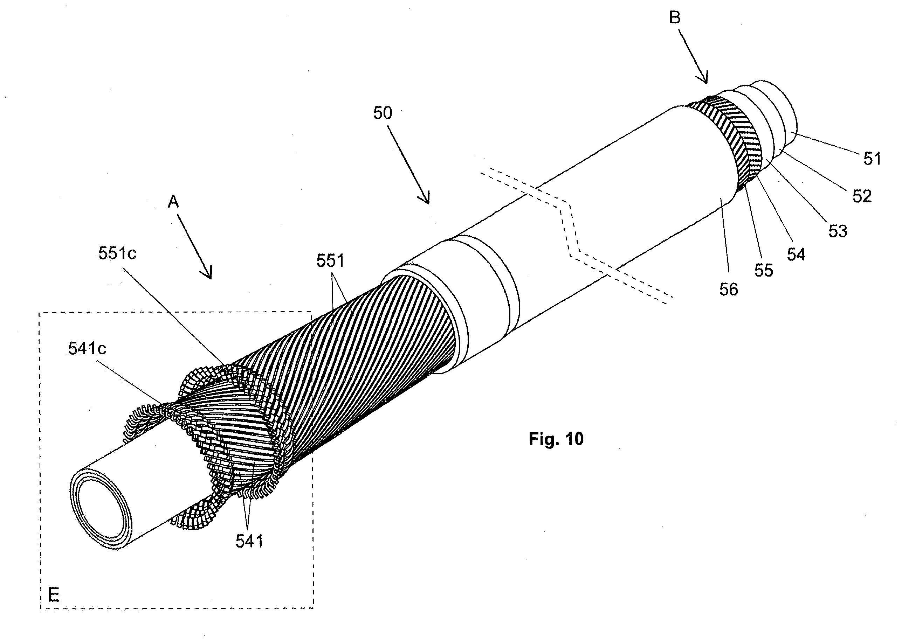

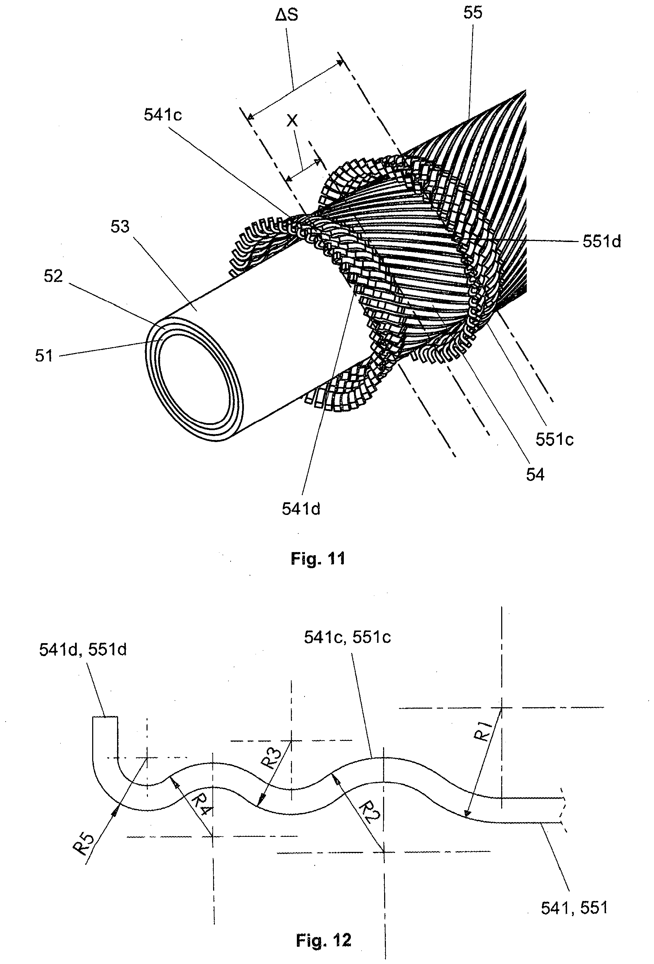

Alternatively, the anchoring profile of the formed terminal region (541c) of at least one wire (541) of the internal tensile armor (54) has a wavy shape in which a curvature radius (R) of each wave varies progressively, starting from a larger radius (R1) to a smaller radius (R5), which is adjacent to a free end (541d) of such wire (541), as can be seen in Figures 10, 11 and 12. If at least one wire (551) of the external tensile armor (55) has a formed terminal region (551c) in an anchoring profile, alternatively such anchoring profile has a wavy shape in which a curvature radius (R) of each wave varies progressively, starting from a larger radius (R1) to a smaller radius (R5), which is adjacent to a free end (551d) of such wire (551), as can be seen in Figures 10, 11 and 12. Note in Figure 12 that the curvature radius (R1) of the first wave is larger than the curvature radius (R2) of the second wave, which is larger than the curvature radius (R3) of the third wave, which is larger than the curvature radius (R4) of the fourth wave, which is larger than the curvature radius (R5) of the fifth wave.

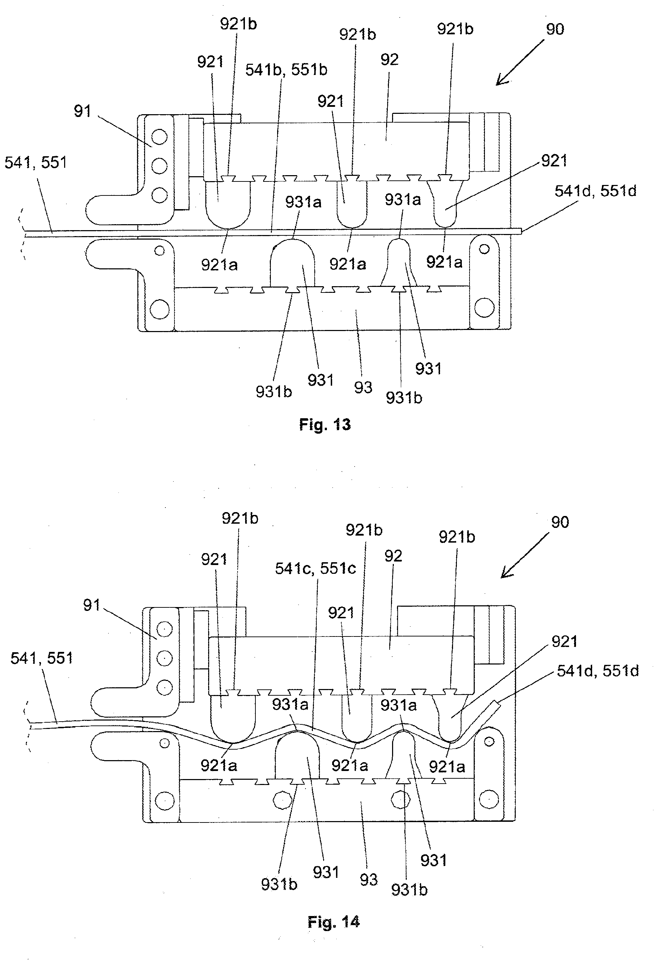

For example, a forming device (90), as can be seen in Figures 13 and 14, to obtain a formed terminal region (541c, 551c) in a wavy shaped anchoring profile of progressive curvature radius (R), comprises a forming die (91) comprising an upper part (92) and a lower part (93), and a drive mechanism capable of moving at least one part (92, 93) toward the other part (92, 93). For example, the drive mechanism may comprise a hydraulic actuator responsible for moving such part (92, 93). The upper part (92) has a plurality of upper teeth (921), each upper tooth (921) having its top (921a) facing downward, and the lower part (93) has a plurality of lower teeth (931), each lower tooth (931) having its top (931st) facing upward, and between each pair of adjacent upper teeth (921) there is a lower tooth (931) and between each pair of adjacent lower teeth (931) there is an upper tooth (921).

In order to forming, the forming device is positioned on the wire (541, 551) so that the post cut terminal region (541b, 551b) to be formed is inserted between the upper part (92) and the lower part (93), as can be seen in Figure 13. When the drive mechanism is activated, as the parts (92, 93) approach each other, the tops (921a, 931a) of the teeth (921, 931) contact the wire (541, 551) and forming the waves. The profile of each top (921a, 931a) and the spacing between consecutive teeth (921, 931) are arranged according to the progressive variation of the curvature radius (R) that is desired to the wave profile. At the end of the forming, as can be seen in Figure 14, the formed terminal region (541c, 551c) of the wire (541, 551) is obtained in a wavy shaped anchoring profile of progressive curvature radius (R).

Preferably, the upper teeth (921) are fastened in a removable manner to the upper part (92), for example, from male and female fittings (921b). Preferably, the lower teeth (931) are fastened in a removable manner to the lower part (93), for example, from male and female fittings (931b). Thus, it is possible to change teeth (921, 931) with different tops (921a, 931a) and it is possible to position consecutive teeth (921, 931) with different spacing between each other, as well as varying the number of teeth (921, 931) that are used, adjusting the forming device (90) according to the wavy shaped anchoring profile to be obtained.

The invention also refers to a tensile armor configuration of a flexible conduit (50), the configuration obtained by the process described above. More particularly, the flexible conduit (50) comprises at least one internal tensile armor (54) and at least one external tensile armor (55) superimposed regarding such internal tensile armor (54), each tensile armor (54, 55) composed of a helical winding of a plurality of wires (541, 551). According to the configuration proposed herein, each wire (551) of the external tensile armor (55) has a free end (551d) different from the free end (541d) of each wire (541) of the internal tensile armor (54) in a length (ΔS) in which the wires (551) of the external tensile armor (55) are shorter than the wires (541) of the internal tensile armor (54) and at least one wire (541) of the internal tensile armor (54) has a formed terminal region (541c) in an anchoring profile, as can be seen in Figures 6, 7, 8, 10 and 11. Thus, advantageously, the formed terminal region (541c) of at least one wire (541) of the internal tensile armor (54) can be obtained with a smaller interference of the wires (551) of the external tensile armor (55).

Preferably, additionally at least one wire (551) of the external tensile armor (55) has a formed terminal region (551c) in an anchoring profile, as can be seen in Figures 7, 8, 10 and 11. In this case, there is a greater anchoring effect in a later anchoring of the tensile armors (54, 55) with a connector (10).

Preferably, the length (ΔS) of the difference between the free end (551d) of each wire (551) of the external tensile armor (55) and the free end (541d) of each wire (541) of the internal tensile armor (54) is greater than or equal to a length (X) of the formed terminal region (541c) of the wire (541) of the internal tensile armor (54). Thus, advantageously, the formed terminal region (541c) of at least one wire (541) of the internal tensile armor (54) can be obtained with an even smaller interference or no interference of the wires (551) of the external tensile armor (55). Figures 6, 7, 8, 10 and 11 show a configuration in which the length (ΔS) of the difference is greater than the length (X) of the formed terminal region (541c) of the wire (541) of the internal tensile armor (54).

Preferably, the anchoring profile of the formed terminal region (541c) of at least one wire (541) of the internal tensile armor (54) has a helical shape, as can be seen in Figures 6, 7 and 8. Preferably, when at least one wire (551) of the external tensile armor (55) has a formed terminal region (551c) on an anchoring profile, such anchoring profile has a helical shape, as can be seen in Figures 7 and 8. One wire (54, 55) with a formed terminal region (541c, 551c) in a helical shaped anchoring profile may be observed in detail in Figure 9. Examples of the way to perform the forming obtaining a formed terminal region (541c, 551c) in a helical shaped anchoring profile and forming devices used for this purpose have already been described above.

Alternatively, the anchoring profile of the formed terminal region (541c) of at least one wire (541) of the internal tensile armor (54) has a wavy shape in which a curvature radius (R) of each wave varies progressively, starting from a larger radius (R1) to a smaller radius (R5), which is adjacent to the free end (541d) of such wire (541), as can be seen in Figures 10, 11 and 12. If at least one wire (551) of the external tensile armor (55) has a formed terminal region (551c) in an anchoring profile, alternatively such anchoring profile has a wavy shape in which a curvature radius (R) of each wave varies progressively, starting from a larger radius (R1) to a smaller radius (R5), which is adjacent to the free end (551d) of such wire (551), as can be seen in Figures 10, 11 and 12. An example of the way to perform the forming obtaining a formed terminal region (541c, 551c) in wavy shaped anchoring profile of progressive curvature radius (R) and forming device used for this purpose have already been described above.

The tensile armor configuration of a flexible conduit (50) is used for anchoring of such flexible conduit (50) with a connector (10). More particularly, the formed terminal regions (541c, 551c) of each wire (541, 551) of the tensile armors (54, 55) are accommodated inside a chamber in the connector (10), such chamber being filled with a resin epoxy (T), thus anchoring such tensile armors (54, 55) with the connector (10).

A formed terminal region (541c, 551c) in helical shaped anchoring profile has advantages regarding a formed terminal region (541c, 551c) in wave shaped anchoring profile with progressive curvature radius (R) or regarding a wave shaped anchoring profile of constant curvature radius (R) referred to in the state-of-the-art. More particularly, the helical shaped anchoring profile provides a superior anchoring effect of the tensile armor (54, 55) with the connector (10). Anchoring effect means the capacity of the tensile armor (54, 55) remaining anchored with the connector (10), supporting efforts in general, such as tensile stresses. This better performance of the helical shaped anchoring profile is explained by the fact that the wire (541, 551) in the formed terminal region (541c, 551c) holds a greater volume through the epoxy resin (T) in the transverse direction to the longitudinal direction of the wire (541, 551), thus imposing greater resistance to tensile stresses in the longitudinal direction of the wire (541, 551).

A formed terminal region (541c, 551c) in wave shaped anchoring profile of progressive curvature radius (R) has advantages regarding a formed terminal region (541c, 551c) in wave shaped anchoring profile of constant curvature radius (R) referred to in the state-of-the-art. More particularly, the level of residual stress in the wave shaped anchoring profile of progressive curvature radius (R) is smaller, since the waves of greater curvature radius (R1, R2) undergo smoother deformation at the time of forming.

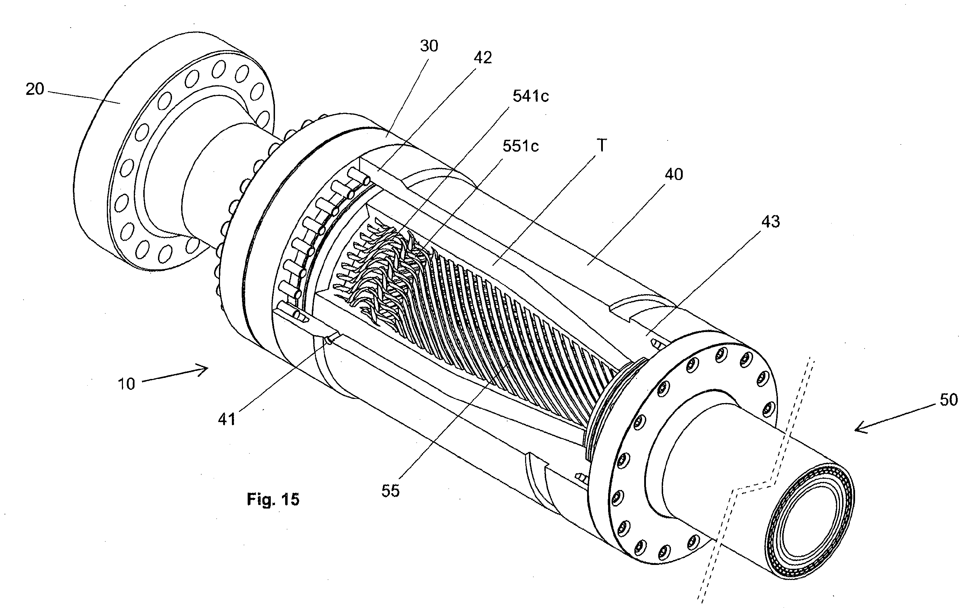

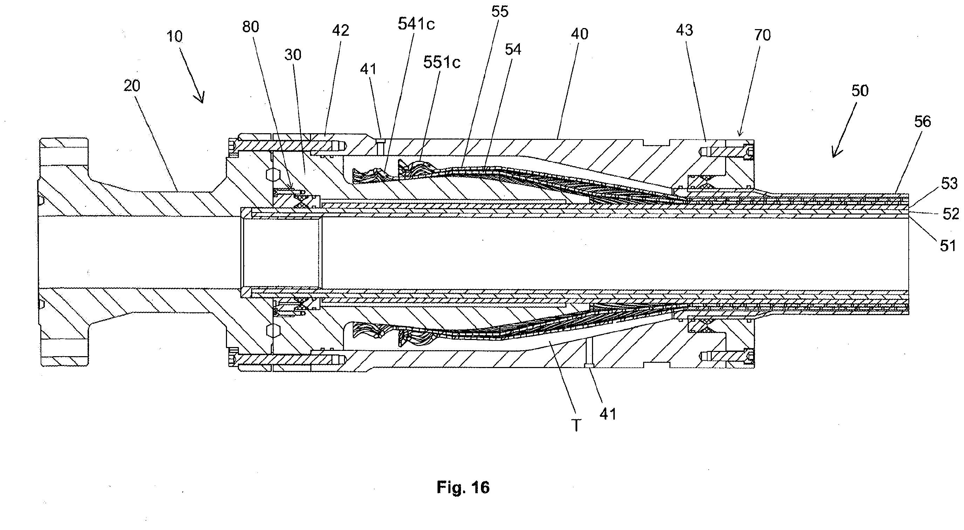

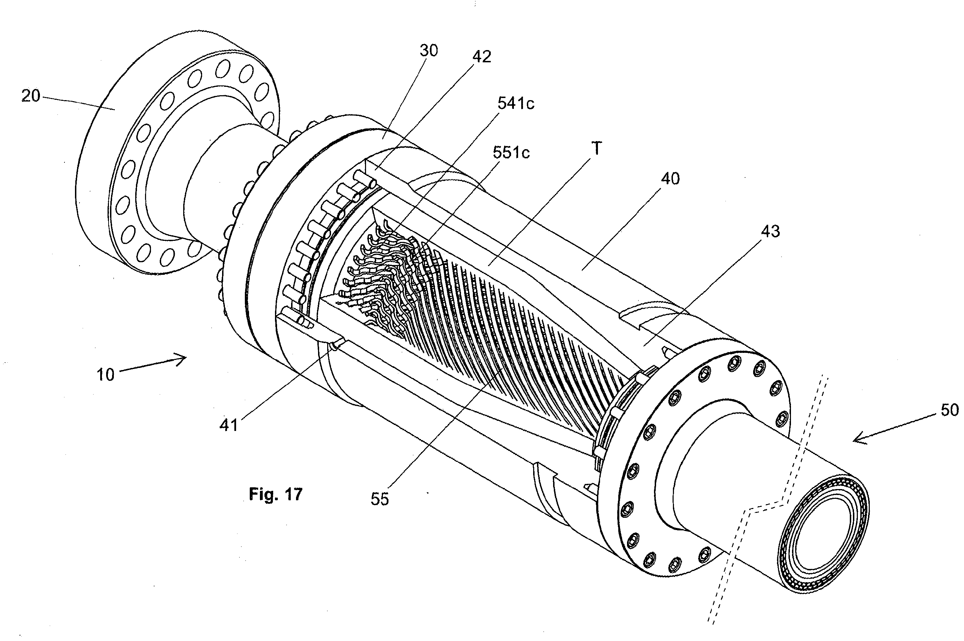

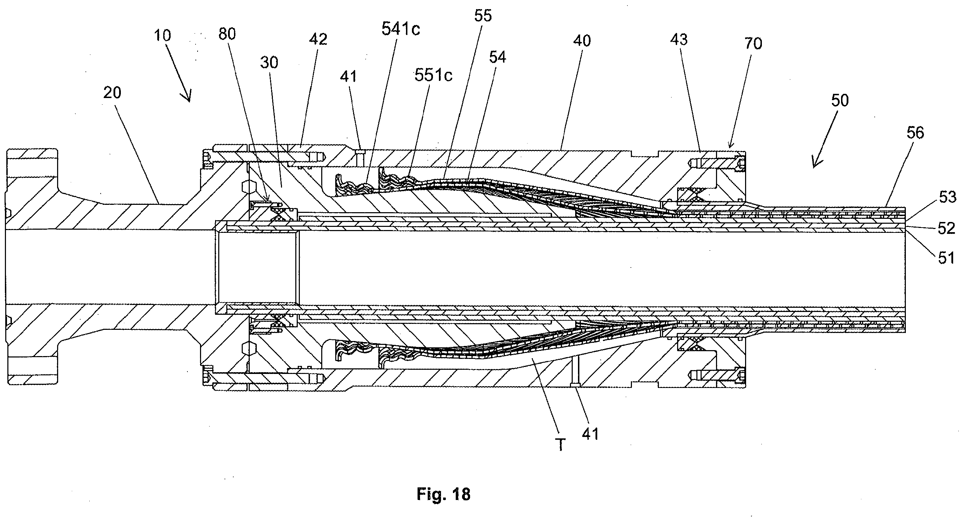

It must be understood that the tensile armor configuration of a flexible conduit (50) proposed herein does not have its use restricted to a connector model (10) in particular. For example, a flexible conduit (50) having a tensile armor configuration proposed by the invention can be seen in Figures 15, 16, 17 and 18 installed in a connector model (10) as disclosed in BRPI1100148-8. More particularly, Figures 15 and 16 show a tensile armor configuration wherein the formed terminal regions (541c, 551c) of the wires (541, 551) of the tensile armor (54, 55) have a helical shaped anchoring profile, while Figures 17 and 18 show a tensile armor configuration wherein the formed terminal regions (541c, 551c) of the wires (541, 551) of the tensile armor (54, 55) have a wave shaped anchoring profile in which the curvature radius (R) of each wave varies progressively.

The connector model (10) shown in Figures 15, 16, 17 and 18, as disclosed in BRPI1100148-8, comprises an external envelope (40) in tubular shape, provided with an anterior end (42) and a posterior end (43); an external sealing set (70) cooperating with the posterior end (43) of the external envelope (40) and the external sealing polymeric layer (56) of the flexible conduit (50) as to perform a seal regarding the external environment to such flexible conduit (50); a closing flange (30) fastened to the anterior end (42) of the external envelope (40) and associated with a connection flange (20); and an internal sealing set (80) cooperating with the closing flange (30) and the internal sealing polymer layer (52) of the flexible conduit (50) as to perform a seal regarding the internal environment to such flexible conduit (50). The external sealing set (70) and the internal sealing set (80) are configured as described in document BR102013021702-6. Alternatively, the external sealing set (70) and the internal sealing set (80) may take other forms, such as that disclosed in BRPI1100148-8.

The external envelope (40) has at least two openings (41). During an assembly operation of the connector (10) on the flexible conduit (50), the epoxy resin (T) is inserted through one of the openings (41) into the chamber in which are accommodated the formed terminal regions (541c, 551c) of each wire (541, 551) of the tensile armors (54, 55), and the air is released by the other opening (41).

The connecting flange (20) is responsible for providing the connection of the connector (10) to an adjacent element, such as another flexible conduit segment, to a manifold station, or a gas and oil extraction platform or ship.

Another example of connector model in which the tensile armor configuration of a flexible conduit (50) proposed by this invention can be used is the one described in BR102013017228-6.

## Claims

1. Process to obtain a tensile armor configuration of a flexible conduit, said flexible conduit (50) comprising at least one internal tensile armor (54) and at least one external tensile armor (55) superimposed to such internal tensile armor (54), each tensile armor (54, 55) composed of a helical winding of a plurality of wires (541, 551), each wire (541, 551) having a terminal region (541a, 551a), wherein the process comprises
a preparation step, in which the external layers of the flexible conduit (50) regarding the external tensile armor (55) are cut to enable access to such external tensile armor (55),
**characterized in that**
the process comprising a disparity step, in which the terminal region of each wire (551) of the external tensile armor (55) and the terminal region (541a) of each wire (541) of the internal tensile armor (54) are cut, assigning a length difference (L) between a free end (551d) of a post cut terminal region (551b) of each wire (551) of the external tensile armor (55) and a free end (541d) of a post cut terminal region (541b) of each wire (541) of the internal tensile armor (54), with the result that the wires (551) of the external tensile armor (55) are shorter than the wires (541) of the internal tensile armor (54),
the process comprising a forming step, in which the post cut terminal region (541b) of at least one wire (541) of the internal tensile armor (54) is plastically deformed obtaining a formed terminal region (541c) in an anchoring profile, wherein the formed terminal region (541c) has a wire length that is shorter than or equal to said length difference (L) between the free end (541d) of the at least one wire (541) of the internal tensile armor (54), at a stage prior to the forming step, and the free ends (551d) of the wires (551) of the external tensile armor (55).

2. Process to obtain a tensile armor configuration of a flexible conduit, according to claim 1, **characterized in that** the anchoring profile of the formed terminal region (541c) of the wire (541) of the internal tensile armor (54) has a helical shape.

3. Process to obtain a tensile armor configuration of a flexible conduit, according to claim 1, **characterized in that** the anchoring profile of the formed terminal region (541c) of the wire (541) of the internal tensile armor (54) has a wavy shape in which a curvature radius (R) of each wave varies progressively, starting from a larger radius (R1) to a smaller radius (R5), which is adjacent to a free end (541d) of such wire (541).

4. Process to obtain a tensile armor configuration of a flexible conduit, according to claim 1, 2 or 3, **characterized in that** the post cut terminal region (551b) of at least one wire (551) of the external tensile armor (55) is also plastically deformed obtaining a formed terminal region (551c) in an anchoring profile.

5. Process to obtain a tensile armor configuration of a flexible conduit, according to claim 4, **characterized in that** the anchoring profile of the formed terminal region (551c) of the wire (551) of the external tensile armor (55) has a helical shape.

6. Process to obtain a tensile armor configuration of a flexible conduit, according to claim 4, **characterized in that** the anchoring profile of the formed terminal region (551c) of the wire (551) of the external tensile armor (55) has a wavy shape in which a curvature radius (R) of each wave varies progressively, starting from a larger radius (R1) to a smaller radius (R5), which is adjacent to a free end (551d) of such wire (551).

7. Flexible conduit comprising a tensile armor configuration, **characterized in that** the tensile armor configuration is obtained by the process defined according to any one of claims 1 to 6.

## Patentansprüche

1. Verfahren zum Erhalten einer Zugarmierungskonfiguration einer flexiblen Leitung, wobei die flexible Leitung (50) mindestens eine interne Zugarmierung (54) und mindestens eine externe Zugarmierung (55) umfasst, die einer solchen internen Zugarmierung (54) überlagert ist, wobei jede Zugarmierung (54, 55) aus einer spiralförmigen Wicklung mehrerer Drähte (541, 551) besteht, wobei jeder Draht (541, 551) einen Endbereich (541a, 551a) aufweist, wobei das Verfahren Folgendes umfasst
einen Vorbereitungsschritt, bei dem die äußeren Schichten der flexiblen Leitung (50) bezüglich der äußeren Zugarmierung (55) geschnitten werden, um den Zugang zu dieser äußeren Zugarmierung (55) zu ermöglichen,
**dadurch gekennzeichnet, dass**
das Verfahren einen Disparitätsschritt umfasst, bei dem der Endbereich (551a) jedes Drahtes (551) der äußeren Zugarmierung (55) und der Endbereich (541a) jedes Drahtes (541) der inneren Zugarmierung (54) geschnitten werden, wodurch eine Längendifferenz (L) zwischen einem freien Ende (551d) eines nachgeschnittenen Endbereichs (551b) jedes Drahtes (551) der äußeren Zugarmierung (55) und einem freien Ende (541d) eines nachgeschnittenen Endbereichs (541b) jedes Drahtes (541) der inneren Zugarmierung (54) festgelegt wird, mit dem Ergebnis, dass die Drähte (551) der äußeren Zugarmierung (55) kürzer als die Drähte (541) der inneren Zugarmierung (54) sind,
das Verfahren einen Formschritt umfasst, bei dem der nachgeschnittene Endbereich (541b) mindestens eines Drahtes (541) der inneren Zugarmierung (54) plastisch verformt wird, wobei ein geformter Endbereich (541c) in einem Verankerungsprofil erhalten wird, wobei der geformte Endbereich (541c) eine Drahtlänge aufweist, die kürzer als die oder gleich der vorgenannten Längendifferenz (L) zwischen dem freien Ende (541d) des mindestens einen Drahtes (541) der inneren Zugarmierung (54), in einer Stufe vor dem Formschritt, und den freien Enden (551d) der Drähte (551) der äußeren Zugarmierung (55) ist.

2. Verfahren zum Erhalten einer Zugarmierungskonfiguration einer flexiblen Leitung nach Anspruch 1, **dadurch gekennzeichnet, dass** das Verankerungsprofil des geformten Endbereichs (541c) des Drahtes (541) der inneren Zugarmierung (54) eine schraubenförmige Form aufweist.

3. Verfahren zum Erhalten einer Zugarmierungskonfiguration einer flexiblen Leitung nach Anspruch 1, **dadurch gekennzeichnet, dass** das Verankerungsprofil des geformten Endbereichs (541c) des Drahtes (541) der inneren Zugarmierung (54) eine Wellenform aufweist, in der ein Krümmungsradius (R) jeder Welle nach und nach variiert, ausgehend von einem größeren Radius (R1) zu einem kleineren Radius (R5), der an ein freies Ende (541d) eines solchen Drahtes (541) angrenzt.

4. Verfahren zum Erhalten einer Zugarmierungskonfiguration einer flexiblen Leitung nach Anspruch 1, 2 oder 3, **dadurch gekennzeichnet, dass** der nachgeschnittene Endbereich (551b) mindestens eines Drahtes (551) der äußeren Zugarmierung (55) ebenfalls plastisch verformt wird, wobei ein geformter Endbereich (551c) in einem Verankerungsprofil erhalten wird.

5. Verfahren zum Erhalten einer Zugarmierungskonfiguration einer flexiblen Leitung nach Anspruch 4, **dadurch gekennzeichnet, dass** das Verankerungsprofil des geformten Endbereichs ,(551c) des Drahtes (551) der äußeren Zugarmierung (55) eine schraubenförmige Form aufweist.

6. Verfahren zum Erhalten einer Zugarmierungskonfiguration einer flexiblen Leitung nach Anspruch 4, **dadurch gekennzeichnet, dass** das Verankerungsprofil des geformten Endbereichs (551c) des Drahtes (551) der äußeren Zugarmierung (55) eine Wellenform aufweist, in der ein Krümmungsradius (R) jeder Welle nach und nach variiert, ausgehend von einem größeren Radius (R1) zu einem kleineren Radius (R5), der an ein freies Ende (551d) eines solchen Drahtes (551) angrenzt.

7. Flexible Leitung, die eine Zugarmierungskonfiguration umfasst, **dadurch gekennzeichnet, dass** die Zugarmierungskonfiguration durch das nach einem der Ansprüche 1 bis 6 definierte Verfahren erhalten wird.

## Revendications

1. Procédé d'obtention d'agencement d'armure de traction d'un conduit souple, ledit conduit souple (50) comprenant au moins une armure de traction intérieure (54) et au moins une armure de traction extérieure (55) superposée à cette armure de traction intérieure (54), chaque armure de traction (54, 55) étant composée d'un enroulement hélicoïdal d'une pluralité de fils (541, 551), chaque fil (541, 551) ayant une région terminale (541a, 551a), le procédé comprenant :
une étape de préparation, au cours de laquelle les couches extérieures du conduit souple (50) relatives à l'armure de traction extérieure (55) sont coupées pour permettre l'accès à cette armure de traction extérieure (55),
**caractérisé en ce que**
le procédé comprend une étape de disparité, au cours de laquelle la région terminale (551a) de chaque fil (551) d'armure de traction extérieure (55) et la région terminale (541a) de chaque fil (541) de l'armure de traction intérieure (54) sont coupées, l'attribution d'une différence de longueur (L) entre une extrémité libre (551d) d'une région terminale post-coupe (551b) de chaque fil (551) de l'armure de traction extérieure (55) et une extrémité libre (541d) d'une région terminale post-coupe (541b) de chaque fil (541) de l'armure de traction intérieure (54), de sorte que les fils (551) de l'armure de traction extérieure (55) sont plus courts que les fils (541) de l'armure de traction intérieure (54),
le procédé comprenant une étape de formage, au cours de laquelle la région terminale post-coupe (541b) d'au moins un fil (541) de l'armure de traction intérieure (54) est déformée plastiquement pour obtenir une région terminale (541c) formée dans un profil d'ancrage, la région terminale formée (541c) ayant une longueur de fil qui est inférieure ou égale à ladite différence de longueur (L) entre l'extrémité libre (541d) de l'au moins un fil (541) de l'armure de traction intérieure (54), à un stade antérieur à l'étape de formage, et les extrémités libres (551d) des fils (551) de l'armure de traction extérieure (55).

2. Procédé d'obtention d'agencement d'armure de traction d'un conduit souple, selon la revendication 1, **caractérisé en ce que** le profil d'ancrage de la région terminale formée (541c) du fil (541) de l'armure de traction intérieure (54) a une forme hélicoïdale.

3. Procédé d'obtention d'agencement d'armure de traction d'un conduit souple, selon la revendication 1, **caractérisé en ce que** le profil d'ancrage de la région terminale formée (541c) du fil (541) de l'armure de traction intérieure (54) a une forme ondulée dans laquelle un rayon de courbure (R) de chaque onde varie progressivement, à partir d'un rayon plus grand (R1) vers un rayon plus petit (R5), qui est adjacent à une extrémité libre (541d) d'un tel fil (541).

4. Procédé d'obtention d'agencement d'armure de traction d'un conduit souple, selon la revendication 1, 2 ou 3, **caractérisé en ce que** la région terminale post-coupe (551b), d'au moins un fil (551) de l'armure de traction extérieure (55) est également déformée plastiquement, obtenant une région terminale formée (551c) dans un profil d'ancrage.

5. Procédé d'obtention d'agencement d'armure de traction d'un conduit souple, selon la revendication 4, **caractérisé en ce que** le profil d'ancrage de la région terminale formée (551c) du fil (551) de l'armure de traction extérieure (55) a une forme hélicoïdale.

6. Procédé d'obtention d'agencement d'armure de traction d'un conduit souple, selon la revendication 4, **caractérisé en ce que** le profil d'ancrage de la région terminale formée (551c) du fil (551) de l'armure de traction extérieure (55) a une forme ondulée dans laquelle un rayon de courbure (R) de chaque onde varie progressivement, à partir d'un rayon plus grand (R1) vers un rayon plus petit (R5), qui est adjacent à une extrémité libre (551d) d'un tel fil (551).

7. Conduit souple comprenant un agencement d'armure de traction, **caractérisé en ce que** l'agencement d'armure de traction est obtenu par le procédé défini selon l'une quelconque des revendications 1 à 6.
